# FASCICULE DE BREVET EUROPEEN

(11) **EP 1 003 123 B1**
(45) Date de publication et mention de la délivrance du brevet: **20.05.2009**
(21) Numéro de dépôt: 99402810.8
(22) Date de dépôt: 12.11.1999
(51) Int. Cl.: G06K 13/08, G06K 7/00

(54) **Agencement pour le blocage d'un support de données dans un dispositif d'échange de données**
Anordnung zum Blockieren eines Datenträgers in einer Datenaustausch-Vorrichtung
Arrangement for blocking a data carrier in a device for data exchange

(30) Priorité: 19.11.1998 FR 9814571
(43) Date de publication de la demande: 24.05.2000
(73) Titulaire: VALEO SECURITE HABITACLE S.A.S., 94042 Créteil Cédex (FR); RENAULT S.A.S., 92100 Boulogne Billancourt (FR)
(72) Inventeur: Canard, Louis, 58000 Nevers (FR); Garcin, Philippe, 58180 Marzy (FR)
(74) Mandataire: Kohn, Philippe

(56) Documents cités:
- EP-A- 0 696 008
- US-A- 4 810 200

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent, lorsqu'il introduit son badge dans le dispositif de lecture, à utiliser le véhicule en lui permettant notamment de procéder au démarrage du moteur du véhicule.

On connaît de nombreux exemples de tels agencements dans lesquels le support de données est une carte rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin d'améliorer le confort d'utilisation d'un tel agencement, il a déjà été proposé de prévoir des moyens d'assistance à l'introduction et/ou à l'extraction du support de données dans le dispositif.

A cet effet, il a déjà été proposé que le dispositif comporte un tiroir motorisé dans lequel la carte est mise en place manuellement et qui est ensuite commandée électriquement en déplacement entre sa position de repos dans laquelle on introduit la carte et une position active de lecture dans laquelle le tiroir amène la carte en regard de moyens de lecture.

Une telle conception est complexe et lourde et peu adaptée à son intégration dans le cadre d'une application à un véhicule automobile.

En vue de prévoir des moyens d'assistance à l'éjection, il a aussi été proposé de nombreuses applications dans lesquelles l'utilisateur, lors de l'introduction, agit à l'encontre d'un ressort de rappel qui accumule de l'énergie, la carte étant bloquée en position active par des moyens commandés de retenue, le ressort préalablement bandé restituant l'énergie en vue d'assister l'extraction de la carte, cette assistance pouvant aboutir jusqu'à une éjection complète hors du logement du boîtier.

Une telle conception n'est pas non plus entièrement satisfaisante dans la mesure où elle nécessite un effort important en fin de course d'introduction de la carte et dans la mesure où les moyens connus de retenue à l'encontre de l'effort appliqué à la carte par le dispositif élastique de rappel ne sont pas adaptés à une application à un véhicule automobile, les vibrations lors du roulage risquant de provoquer leur déclenchement et l'éjection inopinée et dangereuse de la carte.

Afin de remédier aux inconvénients qui viennent d'être mentionnés, il a déjà été proposé dans la demande de brevet français n° 98.07250 (publication FR-A-2 779 563) un agencement pour l'échange de données entre un support de données rigide, ou semi-rigide, et un dispositif d'échange de données, notamment de lecture de données contenues dans le support, du type comportant un boîtier dans lequel le support en forme générale de carte est introduit manuellement dans un logement du boîtier dans lequel il occupe une position active déterminée, et du type dans lequel le dispositif comporte des moyens pour retenir longitudinalement le support de données en position active dans le boîtier qui comportent un levier de blocage du support et un électroaimant commandé de verrouillage du levier de blocage, dans sa position angulaire de blocage du support de données, dont le noyau mobile constitue, par une première extrémité libre, un doigt de verrouillage dont le déplacement peut être commandé en saillie à l'extérieur du boîtier de l'électroaimant pour s'étendre en regard d'une partie du levier de blocage afin d'empêcher la rotation de ce dernier de sa position de blocage vers une position escamotée permettant l'extraction du support de données hors du boîtier.

En cas de défaillance électrique, notamment lorsque le noyau mobile de l'électroaimant de verrouillage est rappelé élastiquement vers la position de verrouillage du levier de blocage, il est impossible d'extraire manuellement le support de données.

Afin de remédier à cet inconvénient, l'invention propose un agencement du type mentionné précédemment, caractérisé en ce qu'il comporte un organe de commande manuelle du déverrouillage du levier de blocage qui agit sur le noyau mobile de l'électroaimant pour provoquer un déplacement en retrait du doigt de verrouillage et libérer ainsi le levier de blocage.

Selon d'autres caractéristiques de l'invention :
- l'organe de déverrouillage est un levier de déverrouillage, monté pivotant autour d'un axe fixe du boîtier, qui comporte un bras radial d'actionnement sur l'extrémité libre duquel on peut agir manuellement pour provoquer la rotation du levier de déverrouillage à partir d'une position de repos dans laquelle le noyau mobile est libre de se déplacer vers une position de déverrouillage, et qui comporte un bras radial de déverrouillage dont l'extrémité libre est susceptible de coopérer avec une partie du noyau mobile de l'électroaimant pour déplacer ce dernier lorsque le levier de déverrouillage pivote de sa position de repos vers sa position de déverrouillage ;
- le levier de déverrouillage est rappelé élastiquement vers sa position de repos ;
- le levier de déverrouillage comporte un bras de rappel qui est susceptible de fléchir élastiquement lorsque le levier de déverrouillage pivote de sa position de repos vers sa position de déverrouillage et dont l'extrémité libre est immobilisée par rapport au boîtier ;
- l'agencement comporte un poussoir de déverrouillage qui est monté coulissant par rapport au boîtier selon une direction orthogonale à l'axe de pivotement du levier de déverrouillage, dont une première extrémité coopère avec l'extrémité libre du bras d'actionnement et dont la seconde extrémité permet d'agir manuellement sur le poussoir ;
- la première extrémité du poussoir de déverrouillage est reliée à l'extrémité libre du bras d'actionnement du levier de déverrouillage par une patte souple de liaison formant charnière d'articulation ;
- le poussoir de déverrouillage comporte, au voisinage de sa première extrémité, des moyens de butée qui coopèrent avec une portion en vis-à-vis du bras d'actionnement pour limiter la course active du poussoir dans le sens du déverrouillage du levier de blocage ;
- le levier et le poussoir de déverrouillage sont réalisés venus de matière par moulage en matière plastique ;
- l'extrémité libre du bras de déverrouillage coopère avec une butée formée à la seconde extrémité libre du noyau mobile de l'électroaimant ;
- le bras de déverrouillage s'étend selon une direction sensiblement perpendiculaire à l'axe de déplacement du noyau mobile de l'électroaimant et le bras d'actionnement est sensiblement parallèle à cet axe de déplacement ;
- l'axe de pivotement du levier de blocage est parallèle au plan dans lequel est située la direction longitudinale d'introduction du support de données et est parallèle à la direction de déplacement du noyau mobile de l'électroaimant, et l'axe de pivotement du levier de déverrouillage est perpendiculaire audit plan ;
- l'axe de pivotement du levier de blocage est perpendiculaire à la direction longitudinale d'introduction du support de données ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective à grande échelle qui illustre certains des principaux composants d'un agencement conforme aux enseignements de l'invention et sur laquelle le badge support de données est illustré dans sa position longitudinale active dans laquelle il est bloqué par le doigt de blocage du levier de blocage, celui-ci étant verrouillé par l'électroaimant de verrouillage, tandis que le levier de déverrouillage manuel est dans sa position de repos ;
- la figure 2 est une vue en plan de dessus de l'agencement illustré à la figure 1 ; et
- la figure 3 est une vue similaire à celle de la figure 2 qui illustre le levier de déverrouillage en position de déverrouillage après action manuelle sur le poussoir.

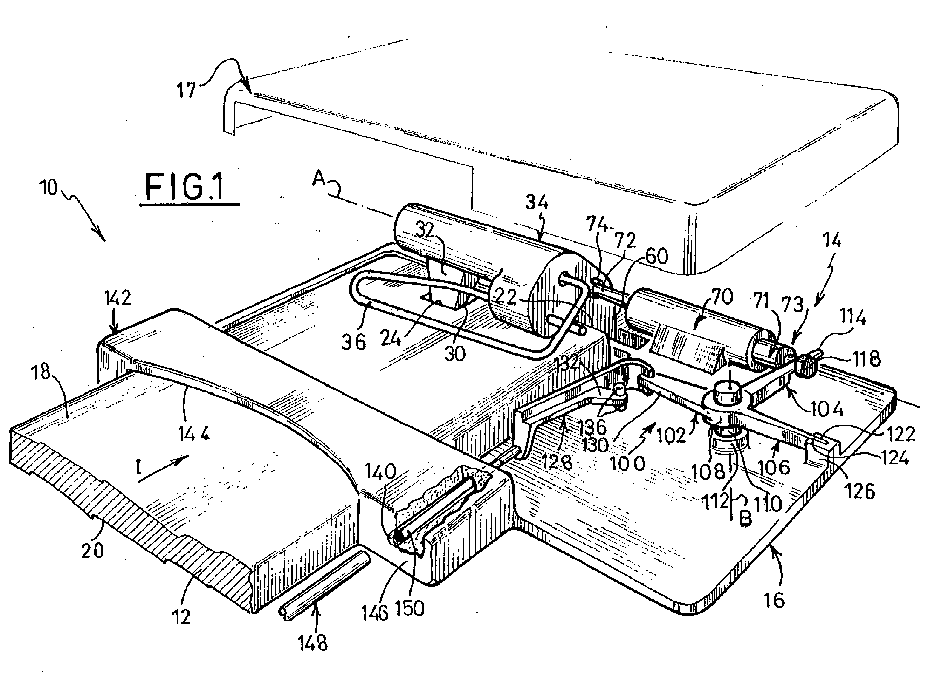

Dans la description qui va suivre, les termes "vertical", "horizontal", "supérieur", "inférieur", "avant", "arrière", etc. sont utilisés en référence à la figure 1 pour faciliter la compréhension de la description et des revendications et ceci à titre non limitatif.

L'agencement 10 conforme aux enseignements de l'invention illustré sur les figures est constitué pour l'essentiel par un support de données ou badge 12 et par un boîtier 14 dont on a représenté une plaque inférieure 16 et, en silhouette, un couvercle 17.

Le badge 12 est ici un élément rigide de forme générale rectangulaire et d'épaisseur réduite qui comporte, au voisinage de son bord longitudinal arrière (non représenté), une partie de préhension permettant de le manipuler et notamment de le faire coulisser parallèlement à son plan général.

Le badge 12 est un support de données qui est susceptible d'être introduit longitudinalement, c'est-à-dire selon la direction I parallèle au plan général de ses grandes faces supérieure 18 et inférieure 20, dans le boîtier 14 et qui est susceptible d'être extrait de ce boîtier selon la même direction dans le sens opposé.

Les moyens de guidage en coulissement du badge 12 dans le boîtier 14, qui sont de conception générale connue, ne sont pas représentés sur les figures et ne seront pas décrits en détail.

Comme on peut le voir sur les figures, le badge 12 comporte à sa partie avant, et au voisinage de son bord transversal avant 22, une fenêtre 24 de contour rectangulaire et dont les côtés sont parallèles à ceux du badge 12.

La fenêtre 24 s'étend verticalement dans le badge et le transverse de part en part.

La fenêtre 24 est une fenêtre de blocage au sens de l'invention, c'est-à-dire qu'elle est destinée à recevoir un organe de blocage porté par le boîtier 14 et qui va maintenant être décrit en détail en référence aux figures.

L'organe de blocage du badge 12 en position active est un doigt de blocage 30 formé à l'extrémité libre d'un bras de blocage 32 appartenant à un levier de blocage 34 qui est monté pivotant par rapport au boîtier autour d'un axe transversal A qui est perpendiculaire à la direction I et parallèle au plan qui contient cette direction I, c'est-à-dire parallèle au plan général du badge 12 formant support de données.

L'axe A de pivotement du levier 34 est donc fixe et le levier de blocage 34 est monté pivotant dans les deux sens autour de cet axe entre deux positions angulaires extrêmes. Ces deux positions sont deux positions stables vers chacune desquelles le levier de blocage 34 est rappelé angulairement de manière élastique par un ressort de rappel bistable 36.

Dans l'exemple de réalisation illustré sur les figures, le ressort 36 est un ressort en fil plié qui présente une forme générale d'épingle à cheveux.

Une position stable du ressort bistable 36 non représentée sur les figures définit la première position stable escamotée du levier de blocage 34 dans laquelle son doigt de blocage 30 est escamoté, c'est-à-dire qu'il ne s'étend pas en regard du plan dans lequel se déplace le badge 12, ni bien entendu à l'intérieur de la fenêtre de blocage 24.

Comme on peut le voir sur la figure 1, le levier de blocage 34 comporte aussi un doigt de commande 60 qui est formé à l'extrémité libre d'un bras de commande appartenant au levier de blocage 34 pour coopérer à la manière d'une came, par sa face arrière avec le bord transversal avant 22 du badge 12.

L'agencement comporte aussi des moyens de verrouillage du levier de blocage 34 en position stable bloquée.

Dans le mode de réalisation illustré sur les figures, les moyens de verrouillage sont illustrés schématiquement sous la forme d'un électroaimant 70 dont le noyau mobile 71 en forme générale de tige comporte une première extrémité libre en forme de doigt de verrouillage 72 qui est normalement partiellement escamoté à l'intérieur du corps de l'électroaimant 70 et qui, dans la position de verrouillage illustrée à la figure 1, fait saillie transversalement vers l'extérieur, c'est-à-dire selon une direction parallèle à l'axe A d'articulation du levier de blocage 34, pour s'étendre en regard d'un prolongement transversal 74 du corps du levier de blocage 34 pour empêcher alors tout pivotement de ce dernier dans le sens correspondant à la libération du badge en vue de son extraction en dehors du boîtier.

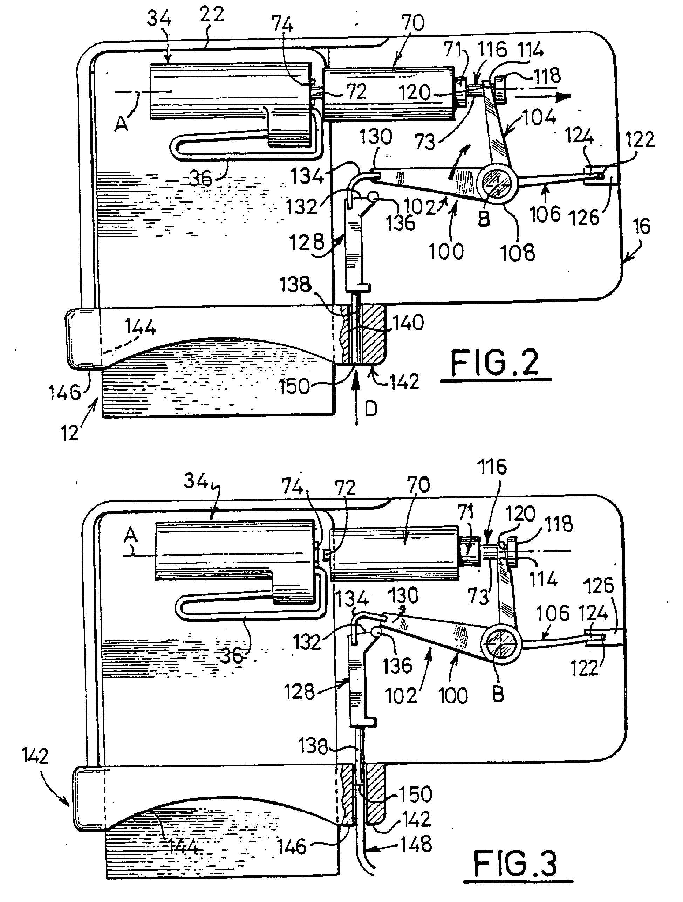

Dans la position angulaire stable de blocage illustrée aux figures 1 et 2, il est impossible de faire pivoter le levier de blocage 34 depuis sa position de blocage en direction de sa position escamotée.

Lorsque l'on désire extraire le badge 12 du dispositif de lecture et d'échange de données, il faut commencer par rétracter le doigt de verrouillage 72. A cet effet l'électroaimant 70 est commandé électriquement dans le sens correspondant de déplacement de son noyau mobile et la tige se déplace alors de la gauche vers la droite en considérant la figure 2.

Ensuite, en partant de la position illustrée aux figures 1 et 2, l'utilisateur extrait longitudinalement d'arrière en avant, c'est-à-dire de haut en bas en considérant la figure 2, le badge 12.

La mise en oeuvre de l'électroaimant 70 nécessite, notamment pour le déverrouillage du bras de blocage 34, que son circuit électrique principal et son circuit de commande soient alimentés en énergie électrique.

En cas de défaillance, et afin de permettre l'extraction manuelle du badge 12, il est prévu des moyens de commande manuelle du déverrouillage du levier de blocage.

Conformément aux enseignements de l'invention, ces moyens sont constitués par un levier 100 de commande manuelle du déverrouillage du levier de blocage 34 qui agit sur le noyau mobile de l'électroaimant 70 pour provoquer un déplacement en retrait du doigt de verrouillage 72 et libérer ainsi le levier de blocage.

Comme on peut le voir sur les figures, le levier de déverrouillage 100 est monté pivotant dans les deux sens autour d'un axe géométrique B qui est perpendiculaire à la plaque 16, et donc au plan du badge 12, ainsi qu'à la direction d'introduction I et à l'axe de pivotement du levier de blocage 34.

Dans l'agencement illustré sur les figures, l'axe B de pivotement du levier de déverrouillage 100 est aussi orthogonal à l'axe de déplacement du noyau mobile 71 en forme de tige de l'électroaimant 70.

Le levier de déverrouillage 100 est essentiellement constitué par trois bras radiaux d'actionnement 102, de déverrouillage 104 et de rappel élastique 106 qui sont répartis angulairement sensiblement à angle droit et qui s'étendent tous radialement à partir du corps central 108 du levier de déverrouillage 100 qui comporte des tronçons 110 d'articulation reçus dans des parties complémentaires 112 de la plaque 16 et du couvercle 17 pour le montage pivotant du levier de déverrouillage 100.

Le bras de déverrouillage 104 s'étend ici selon une direction sensiblement perpendiculaire à l'axe de déplacement de la tige de l'électroaimant 70 et son extrémité libre amincie 114 est reçue dans une gorge 116 formée dans le deuxième tronçon d'extrémité libre 73 de la tige formant noyau mobile 71 de l'électroaimant 70 qui fait saillie axialement au delà du corps de l'électroaimant vers la droite en considérant les figures, c'est-à-dire à l'opposé de la première extrémité libre 72 formant doigt de verrouillage.

La gorge 116 est délimitée axialement vers la droite par une collerette d'extrémité libre 118 qui délimite une surface transversale de butée 120 avec laquelle est susceptible de coopérer l'extrémité libre 114 du bras de déverrouillage 104.

Le bras radial 106 de rappel élastique est un bras de section réduite qui est déformable élastiquement en fléchissement par rapport à la direction générale du bras et dont l'extrémité libre 122 est reçue verticalement dans une encoche ouverte 124 appartenant à un prolongement supérieur 126 de la plaque 16.

Ainsi, l'extrémité 122 assure l'encastrement de l'extrémité libre de la poutre fléchissante constituée par le bras de rappel élastique 106 et elle détermine aussi la position angulaire de repos du levier de déverrouillage 100 illustrée aux figures 1 et 2.

Pour commander le levier de déverrouillage 100 en rotation autour de son axe B, dans le sens horaire en considérant les figures et à partir de sa position de repos illustrée aux figures 1 et 2, il est prévu un poussoir 128 de commande manuelle du déverrouillage qui agit sur l'extrémité libre 130 du bras d'entraînement 102.

A cet effet, le poussoir 128 est monté coulissant longitudinalement par rapport au boîtier 12 selon une direction D orthogonale à l'axe de pivotement B et perpendiculaire à l'axe A d'articulation du levier de blocage 34 et de déplacement du noyau mobile 71.

La première extrémité longitudinale 132 du poussoir 128 est relie à l'extrémité libre 130 du bras d'actionnement 102 par une lame mince coudée 134 formant charnière de liaison et d'articulation entre ces deux éléments.

La première extrémité 132 comporte aussi un doigt 136 de butée qui, comme on peut le voir à la figure 3, vient en contact avec la partie en vis-à-vis de l'extrémité libre 130 du bras d'actionnement 102 pour limiter la course active du poussoir 128 dans le sens du déverrouillage.

Le poussoir 128 est guidé en coulissement selon la direction D par sa seconde extrémité longitudinale 138 en forme de tige qui est reçue dans un trou débouchant correspondant 140 formé dans une partie 142 du boîtier appartenant à la plaque 16 dans laquelle est aussi formée une fenêtre 144 d'introduction du badge 12 et qui est délimitée par une face transversale avant 146.

Dans la position de repos du levier de déverrouillage 100, l'extrémité libre 150 de la tige 138 du poussoir 128 est en affleurement avec le plan de la face transversale 146.

On décrira maintenant le fonctionnement du levier 100 de commande manuelle du déverrouillage du levier de blocage 34.

Dans la position de repos du levier de déverrouillage 100 illustré aux figures 1 et 2, l'extrémité libre 114 du bras de déverrouillage 104 est reçue dans la gorge 116 de la seconde extrémité 73 du noyau mobile 71 et ce dernier est libre de se déplacer axialement, de la gauche vers la droite en considérant la figure 2, pour permettre le déverrouillage du levier de blocage 34 en provoquant le retrait dans la même direction de l'extrémité libre formant doigt de blocage 72.

Ce déverrouillage est normalement commandé électriquement par l'électroaimant 70.

En cas de défaillance électrique, il est possible d'agir sur le levier de déverrouillage 100 de manière manuelle.

A cet effet, comme cela est illustré à la figure 3, l'utilisateur agit sur l'extrémité libre 100 de la tige 138 du poussoir de déverrouillage 128 par l'intermédiaire d'un objet 148 en forme de tige mince qui est par exemple l'extrémité d'une attache-trombone ou la pointe d'un stylo à bille.

En agissant ainsi sur la tige 138, on provoque le coulissement du poussoir 128, de bas en haut en considérant les figures 2 et 3, selon la direction D.

Le mouvement de coulissement du poussoir de déverrouillage 128 est transformé en un mouvement de pivotement du levier de déverrouillage 100 par l'intermédiaire de la charnière 134.

Ainsi, l'action sur la tige 138 au moyen de l'outil 148 est convertie en un mouvement de rotation, dans le sens horaire en considérant les figures 2 et 3, du levier de déverrouillage 100.

Ce mouvement de rotation provoque la rotation dans le même sens de l'extrémité 114 du bras de déverrouillage 104 qui coopère avec la face de butée 120 de la collerette 118 de la seconde extrémité 73 du noyau mobile 71 provoquant ainsi le déplacement dans le sens du déverrouillage du noyau mobile 71. Ce déplacement, de la gauche vers la droite, a pour effet de provoquer un déplacement correspondant du doigt de verrouillage 72 qui est alors dans la position illustrée à la figure 3 dans laquelle il ne s'étend plus en regard de la portion complémentaire 74 du levier de blocage 34, ce dernier étant à nouveau libre de pivoter autour de son axe d'articulation A en permettant ainsi l'extraction manuelle du badge 12, de haut en bas en considérant la figure 3.

Le pivotement du levier de déverrouillage 100 dans le sens horaire provoque aussi le fléchissement de son bras de rappel 106 qui est légèrement déformé élastiquement comme on peut le voir à la figure 3.

Dès que l'utilisateur relâche son action sur la tige 138 du poussoir 128, l'énergie élastique accumulée dans le bras de rappel 106 provoque le retour automatique du levier de déverrouillage 100 vers sa position de repos illustrée aux figures 1 et 2.

Par contre, du fait de la longueur axiale de la gorge 116, l'extrémité libre 114 du bras de déverrouillage 104 n'entraîne pas le noyau mobile 71 axialement de la droite vers la gauche en laissant ainsi le levier de blocage 34 libre de pivoter.

Seules l'alimentation électrique et la commande de l'électroaimant 70 pourront provoquer le verrouillage à nouveau du levier de blocage 34.

Le levier de déverrouillage 100 est avantageusement réalisé de manière particulièrement économique avec le poussoir 128 sous la forme d'une pièce unique moulée en matière plastique, la charnière 134 étant aussi réalisée venue de matière avec le levier de déverrouillage 100 et le poussoir 128.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif d'échange de données (14, 16, 17), notamment de lecture de données contenues dans le support, du type comportant un boîtier dans lequel le support en forme générale de carte est introduit manuellement dans un logement du boîtier dans lequel il occupe une position active déterminée, et du type dans lequel le dispositif comporte des moyens pour retenir longitudinalement le support de données (12) en position active dans le boîtier qui comportent un levier (34) de blocage du support (12) et un électroaimant (70, 71) commandé de verrouillage du levier de blocage (34), dans sa position angulaire de blocage du support de données (12), dont le noyau mobile (71) constitue, par une première extrémité libre (72), un doigt de verrouillage dont le déplacement peut être commandé en saillie à l'extérieur du boîtier de l'électroaimant (70) pour s'étendre en regard d'une partie (74) du levier de blocage afin d'empêcher la rotation de ce dernier de sa position de blocage (34) vers une position escamotée permettant l'extraction du support de données hors du boîtier, **caractérisé en ce qu'**il comporte un organe (100, 128) de commande manuelle du déverrouillage du levier de blocage (34) qui agit sur le noyau mobile (71) de l'électroaimant (70) pour provoquer un déplacement en retrait du doigt de verrouillage (72) et libérer ainsi le levier de blocage.

2. Agencement selon la revendication précédente, **caractérisé en ce que** l'organe de déverrouillage est un levier de déverrouillage (100), monté pivotant autour d'un axe fixe (B) du boîtier, qui comporte un bras radial d'actionnement (102) sur l'extrémité libre (130) duquel on peut agir manuellement pour provoquer la rotation du levier de déverrouillage à partir d'une position de repos dans laquelle le noyau mobile (71) est libre de se déplacer vers une position de déverrouillage, et qui comporte un bras radial (102) de déverrouillage dont l'extrémité libre (114) est susceptible de coopérer avec une partie (73, 116, 118, 120) du noyau mobile (71) de l'électroaimant (70) pour déplacer ce dernier lorsque le levier de déverrouillage (100) pivote de sa position de repos vers sa position de déverrouillage.

3. Agencement selon la revendication précédente, **caractérisé en ce que** le levier de déverrouillage (100) est rappelé élastiquement vers sa position de repos.

4. Agencement selon la revendication précédente, **caractérisé en ce que** le levier de déverrouillage (100) comporte un bras (106) de rappel qui est susceptible de fléchir élastiquement lorsque le levier de déverrouillage (100) pivote de sa position de repos vers sa position de déverrouillage et dont l'extrémité libre (122) est immobilisée par rapport au boîtier (16, 124, 126).

5. Agencement selon l'une quelconque des revendications 2 à 4, **caractérisé en ce qu'**il comporte un poussoir (128) de déverrouillage qui est monté coulissant par rapport au boîtier (16, 140, 142) selon une direction (D) orthogonale à l'axe (B) de pivotement du levier de déverrouillage (100), dont une première extrémité (132) coopère avec l'extrémité libre (130) du bras d'actionnement (102) et dont la seconde extrémité (138) permet d'agir manuellement sur le poussoir (128).

6. Agencement selon la revendication précédente, **caractérisé en ce que** la première extrémité (132) du poussoir de déverrouillage (128) est reliée à l'extrémité libre (130) du bras (102) d'actionnement du levier de déverrouillage (100) par une patte souple de liaison (134) formant charnière d'articulation.

7. Agencement selon l'une quelconque des revendications 5 ou 6, **caractérisé en ce que** le poussoir de déverrouillage (128) comporte, au voisinage de sa première extrémité (132), des moyens de butée (136) qui coopèrent avec une portion en vis-à-vis (130) du bras d'actionnement (102) pour limiter la course active du poussoir (128) dans le sens du déverrouillage du levier de blocage (34).

8. Agencement selon l'une quelconque des revendications 5 à 7, **caractérisé en ce que** le levier (100) et le poussoir (128) de déverrouillage sont réalisés venus de matière par moulage en matière plastique.

9. Agencement selon l'une quelconque des revendications 2 à 8, **caractérisé en ce que** l'extrémité libre (114) du bras de déverrouillage (104) coopère avec une butée (118, 120) formée à la seconde extrémité libre (73) du noyau mobile (71) de l'électroaimant (70).

10. Agencement selon l'une quelconque des revendications 2 à 9, **caractérisé en ce que** le bras de déverrouillage (104) s'étend selon une direction sensiblement perpendiculaire à l'axe de déplacement du noyau mobile (71) de l'électroaimant (70), et **en ce que** le bras d'actionnement (102) est,sensiblement parallèle à cet axe de déplacement.

11. Agencement selon l'une quelconque des revendications 1 à 10, **caractérisé en ce que** l'axe (A) de pivotement du levier (34) de blocage est parallèle au plan dans lequel est située la direction longitudinale d'introduction (I) du support de données et est parallèle à la direction de déplacement du noyau mobile (71) de l'électroaimant (70), et **en ce que** l'axe (B) de pivotement du levier de déverrouillage est perpendiculaire audit plan.

12. Agencement selon l'une quelconque des revendications précédentes, **caractérisé en ce que** l'axe (A) de pivotement du levier de blocage (34) est perpendiculaire à la direction longitudinale (I) d'introduction du support de données (12).

13. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10) for the interchange of data between a rigid or semi-rigid data medium (12) and a data interchange device (14, 16, 17), particularly a reader of data contained in the medium, of the type comprising a unit into which the medium, generally in the form of a card, is introduced manually into a housing in the unit in which it occupies a determined active position, and of the type in which the device comprises means for longitudinally holding the data medium (12) in an active position in the unit which means comprise a lever (34) for immobilizing the support (12) and an electromagnetic (70, 71) made to lock the immobilizing lever (34) in its angular position which immobilizes the data medium (12), the mobile core plunger (71) of which electromagnet constitutes, via a first free end (72), a locking finger, which can made to project out of the casing the electromagnet (70) to extend facing a part (74) of the immobilizing lever so as to prevent the latter from rotating from its immobilizing position (34) into a retracted position which allows the data medium to be extracted from the unit, **characterized in that** this arrangement comprises a member (100, 128) for manually unlocking the immobilizing lever (34) which acts on the mobile core plunger (71) of the electromagnetic (70) to cause the locking finger (72) to retract and thus release the immobilizing lever.

2. Arrangement according to the preceding claim, **characterized in that** the unlocking member is an unlocking lever (100), mounted so that it can pivot about a fixed axis (B) of the unit, which comprises a radial actuating arm (102), the free end (130) of which can be acted upon manually to cause the unlocking lever to rotate from a position of rest in which the mobile plunger (71) is free to move into an unlocked position, and which comprises a radial unlocking arm (102), the free end (114) of which can cooperate with a part (73, 116, 118, 120) of the mobile core plunger (71) of the electromagnetic (70) to move the latter when the unlocking lever (100) pivots from its position of rest into its unlocked position.

3. Arrangement according to the preceding claim, **characterized in that** the unlocking lever (100) is elastically returned to its position of rest.

4. Arrangement according to the preceding claim, **characterized in that** the unlocking lever (100) comprises a return arm (106) which can flex elastically when the unlocking lever (100) pivots from its position of rest into its unlocked position and the free end (122) of which is immobilized with respect to the unit (16, 124, 126).

5. Arrangement according to any one of Claims 2 to 4, **characterized in that** it comprises a unlocking push-rod (128) which is mounted so that it can slide with respect to the unit (16, 140, 142) in a direction (D) that is orthogonal to the axis (B) of pivoting of unlocking lever (100), a first end (132) of which cooperates with the free end (130) of the actuating arm (102) and the second end (138) of which makes it possible for the push rod (102) to be acted on manually.

6. Arrangement according to the preceding claim, **characterized in that** first end (132) of the unlocking push rod (128) is connected to the free end (130) of the arm (102) that actuates the unlocking lever (100) by a flexible connecting tab (134) which forms an articulation hinge.

7. Arrangement according to either one of Claims 5 and 6, **characterized in that** the unlocking push rod (128) includes, near its first end (132), stop means (136) which cooperate with a portion (130) opposite belonging to the actuating arm (132) so as to limit the active travel of the push rod (128) in the direction of unlocking the immobilizing lever (34).

8. Arrangement according to any one of Claims 5 to 7, **characterized in that** the lever (100) and the unlocking push rod (128) are formed as a single integral part as a plastic moulding.

9. Arrangement according to any one of Claims 2 to 8, **characterized in that** the free end (114) of the unlocking (104) cooperates with a stop (118, 120) formed at the second free end (73) of the mobile core plunger (71) of the electromagnetic (70).

10. Arrangement according to any one of Claims 2 to 9, **characterized in that** the unlocking arm (104) extends in a direction substantially perpendicular to the axis of movement of the mobile core plunger (71) of the electromagnetic (70), and **in that** the actuating arm (102) is substantially parallel to the axis of movement.

11. Arrangement according to any one of Claims 1 to 10, **characterized in that** the axis of pivoting of the immobilizing lever (34) is parallel to the plane in which the longitudinal direction of introduction (I) of the data medium lies and is parallel to the direction in which the mobile core plunger (71) of the electromagnetic (70) moves, and **in that** the axis (B) of pivoting of the unlocking lever is perpendicular to the said plane.

12. Arrangement according to any one of the preceding claims, **characterized in that** the axis (A) of pivoting of the immobilizing lever (34) is perpendicular to the longitudinal direction of introduction (I) of the data medium (12).

13. Arrangement according to any one of the preceding claims, **characterized in that** it is fitted to a motor vehicle in which the anti-theft functions are partially or completely fulfilled by data processing, some of which data, contained in the data medium (12), represents an authorized user or a group of authorized users of the vehicle.

## Patentansprüche

1. Anordnung (10) für den Datenaustausch zwischen einem starren oder halbstarren Datenträger (12) und einer Datenaustausch-Einrichtung (14, 16, 17), insbesondere zum Lesen von Daten, die in dem Träger enthalten sind, der Art, die ein Gehäuse umfasst, in welchem der Träger in allgemeiner Kartenform von Hand in eine Aufnahme des Gehäuses eingeführt wird, in welcher er eine bestimmte aktive Position einnimmt, und der Art, in welcher die Einrichtung Mittel umfasst, um den Datenträger (12) in aktiver Position im Gehäuse in Längsrichtung zurückzuhalten, die einen Blockierungshebel (34) für den Träger (12) und einen Elektromagneten (70, 71) umfassen, der zur Verriegelung des Blockierungshebels (34) in seiner Winkelposition zur Blockierung des Datenträgers (12) betätigt wird, dessen beweglicher Kern (71) durch ein erstes freies Ende (72) einen Verriegelungszapfen bildet, dessen Verschiebung außen am Gehäuse des Elektromagneten (70) vorspringend gesteuert werden kann, um sich gegenüber einem Teil (74) des Blockierungshebels zu erstrecken, um die Drehung dieses letzteren aus seiner Blockierungsposition (34) zu einer eingezogenen Position zu verhindern, die das Herausziehen des Datenträgers aus dem Gehäuse gestattet, **dadurch gekennzeichnet, dass** sie eine Einrichtung (100, 128) zur manuellen Steuerung der Entriegelung des Blockierungshebels (34) umfasst, die auf den beweglichen Kern (71) des Elektromagneten (70) wirkt, um eine zurückziehende Verschiebung des Verriegelungszapfens (72) zu bewirken und so den Blockierungshebel freizugeben.

2. Anordnung nach dem vorhergehenden Anspruch, **dadurch gekennzeichnet, dass** die Entriegelungseinrichtung ein Entriegelungshebel (100) ist, der um eine feste Achse (B) des Gehäuses schwenkbar angebracht ist, der einen radialen Betätigungsarm (102) am freien Ende (130) umfasst, von welchem man von Hand einwirken kann, um die Drehung des Verriegelungshebels ausgehend von einer Ruheposition zu bewirken, in welcher der bewegliche Kern (71) frei ist, sich zu einer Entriegelungsposition zu verschieben, und der einen radialen Entriegelungsarm (102) umfasst, dessen freies Ende (114) geeignet ist, mit einem Teil (73, 116, 118, 120) des beweglichen Kerns (71) des Elektromagneten (70) zusammenzuwirken, um diesen letzteren zu verschieben, wenn der Entriegelungshebel (100) aus einer Ruheposition zu seiner Entriegelungsposition schwenkt.

3. Anordnung nach dem vorhergehenden Anspruch, **dadurch gekennzeichnet, dass** der Entriegelungshebel (100) elastisch zu seiner Ruheposition zurückgestellt wird.

4. Anordnung nach dem vorhergehenden Anspruch, **dadurch gekennzeichnet, dass** der Entriegelungshebel (100) einen Rückstellarm (106) umfasst, der in der Lage ist, elastisch nachzugeben, wenn der Entriegelungshebel (100) aus seiner Ruheposition zu seiner Entriegelungsposition schwenkt, und dessen freies Ende (122) in Bezug auf das Gehäuse (16, 124, 126) unbeweglich ist.

5. Anordnung nach einem der Ansprüche 2 bis 4, **dadurch gekennzeichnet, dass** sie einen Entriegelungsdrücker (128) umfasst, der in Bezug auf das Gehäuse (16, 140, 142) entsprechend einer Richtung (D) orthogonal zur Schwenkachse (B) des Entriegelungshebels (100) gleitend angebracht ist, dessen eines erstes Ende (132) mit dem freien Ende (130) des Betätigungsarms (102) zusammenwirkt und dessen zweites Ende (138) gestattet, von Hand auf den Drücker (128) einzuwirken.

6. Anordnung nach dem vorhergehenden Anspruch, **dadurch gekennzeichnet, dass** das erste Ende (132) des Entriegelungsdrückers (128) mit dem freien Ende (130) des Betätigungsarmes (102) des Entriegelungshebels (100) durch eine nachgiebige Verbindungsklaue (134) verbunden ist, die ein Drehgelenk bildet.

7. Anordnung nach einem der Ansprüche 5 oder 6, **dadurch gekennzeichnet, dass** der Entriegelungsdrücker (128) in der Nähe seines ersten Endes (132) Anschlagmittel (136) aufweist, die mit einem gegenüberstehenden Abschnitt (130) des Betätigungsarmes (102) zusammenwirken, um den aktiven Weg des Drückers (128) in Richtung der Entriegelung des Blockierungshebels (34) zu begrenzen.

8. Anordnung nach einem der Ansprüche 5 bis 7, **dadurch gekennzeichnet, dass** der Hebel (100) und der Entriegelungsdrücker (128) aus einem Material durch Formen in Kunststoffmaterial ausgeführt sind

9. Anordnung nach einem der Ansprüche 2 bis 8, **dadurch gekennzeichnet, dass** das freie Ende (114) des Entriegelungsarmes (104) mit einem Anschlag (118, 120) zusammenwirkt, der am zweiten freien Ende (73) des beweglichen Kerns (71) des Elektromagneten (70) ausgebildet ist.

10. Anordnung nach einem der Ansprüche 2 bis 9, **dadurch gekennzeichnet, dass** sich der Entriegelungsarm (104) entsprechend einer Richtung im Wesentlichen senkrecht zur Verschiebungsachse des beweglichen Kerns (71) des Elektromagneten (70) erstreckt und dass der Betätigungsarm (102) im Wesentlichen parallel zu dieser Verschiebungsachse ist.

11. Anordnung nach einem der Ansprüche 1 bis 10, **dadurch gekennzeichnet, dass** die Schwenkachse (A) des Blockierungshebels (34) zu der Ebene parallel ist, in welcher sich die Längsrichtung des Einführens (I) des Datenträgers befindet, und parallel zur Verschiebungsrichtung des beweglichen Kerns (71) des Elektromagneten ist, und dass die Schwenkachse (B) des Entriegelungshebels zu dieser Ebene senkrecht ist.

12. Anordnung nach einem der vorhergehenden Ansprüche, **dadurch gekennzeichnet, dass** die Schwenkachse (A) des Blockierungshebels (34) zur Längsrichtung (I) des Einführens des Datenträgers (12) senkrecht ist.

13. Anordnung nach einem der vorhergehenden Ansprüche, **dadurch gekennzeichnet, dass** sie ein Kraftfahrzeug ausstattet, dessen Diebstahlsicherungsfunktionen teilweise oder vollständig durch Verarbeitung von Daten sichergestellt werden, von denen bestimmte, die im Datenträger (12) enthalten sind, für einen zugelassenen Benutzer oder eine Gruppe von zugelassenen Benutzern des Fahrzeugs repräsentativ sind.
